# EUROPEAN PATENT SPECIFICATION

(11) **EP 2 522 582 B1**
(45) Date of publication and mention of the grant of the patent: **11.06.2014**
(21) Application number: 12167506.0
(22) Date of filing: 10.05.2012
(51) Int. Cl.: B65B 9/13, B65B 51/30

(54) **Form, fill and seal machine**
Form-,Füll- und Verschliessmaschine
Machine à former, remplir et sceller

(30) Priority: 11.05.2011 ES 201130751
(43) Date of publication of application: 14.11.2012
(73) Proprietor: Tecnicas Mecanicas Ilerdenses, S.L., 25190 Lleida (ES)
(72) Inventor: Caba Muntada, Joan, 25240 Linyola (ES)
(74) Representative: Curell Suñol S.L.P.

(56) References cited:
- EP-A1- 0 329 495
- EP-A1- 0 844 175
- EP-A2- 0 294 582

## Description

### Field of the invention

The invention relates to a form, fill and seal machine, more generally known in the art as an FFS machine.

The invention relates in particular to improvements in the bag forming part of the machine according to the preamble of claim 1.

### State of the art

The FFS machines are machines characterized by automatically making the bag and filling it, starting out from a roll of a tubular film of polymeric material.

These machines have four basic workstations: unwinding station, bag forming station, filling station and finally the mouth sealing station.

The main task of the bag forming station is to cut the roll for making the bag to the required size and sealing the bottom end thereof. During the bag forming operation, the machine performs several rapid movements that require complex control. Furthermore, the more mechanically complex the machine is, the greater is the probability of unnecessary defects in the bag forming leading to undesired standstills.

Document EP 0 294 582 A2 discloses a form, fill and seal machine in which the respective front end of the tubular sheath which is provided with a welded base seam and hangs down freely in the vertical direction, can be advanced intermittently by means of guiding and feeding rollers, in each case by one bag or sack length, between welding jaws of a welding apparatus which perform opening and closing movements in a horizontal plane. A transverse cutting means is arranged beneath the welding jaws. Underneath said cutting means, there are provided on a transporting apparatus pairs of grippers which feed the bags or sacks in a hanging fashion, which are separated from the tubular sheath and are provided with welded base seams, in a hanging fashion with a horizontal conveying direction to a transfer apparatus which transports said bags to a filling station, via a cooling section for cooling the welded base seams. The grippers essentially carry out no idling strokes during the intermittent drive of the transporting apparatus, the transporting apparatus consists of a hub-like and intermittently driven supporting piece having radial arms which is rotatably mounted on a vertical shaft, at the free ends of which arms the grippers which are provided in pairs are arranged.

Document EP 0 844 175 A1 discloses a form, fill and seal machine in which between the sack forming station and the sack filling station, an intermediate station is established whose distance from the filling station is considerably less than the distance between the filling station and the sealing station, in order that when the sack transfer carriage moves, the sacks will arrive at the filling station within substantially less time than that required for it to be conveyed to the other stations, allocating more time to the filling phase. The machine comprises a welding mechanism to reinforce the ends of the sack, after the sack has been filled and sealed. Also the sacking machine is provided with a sack forming unit devised to fragment the continuous tubular band from which said sacks are obtained and to provide a seal by welding the bottom end of each sack, the foregoing in optimum conditions for the sacks to be capable of withstanding the next immediate sack filling phase.

### Summary of the invention

It is an object of the invention to provide a form, fill and seal machine of the type mentioned at the beginning, having a more robust configuration and a more precise operation, so as to facilitate the control thereof and reduce the undesired standstills.

This object is attained by a form, fill and seal machine of the type first mentioned hereinabove, according to the characterizing portion of claim 1.

In the first place, in the machine of the invention, since only one of the clamps is movable, the number of members to be controlled is reduced and the accuracy for holding the tubular film is improved. It is thus harder for maladjustments of the tubular film holding point to be caused by the clamps.

On the other hand, the guide member allows the sheet to be held lightly, it being possible to avoid the need of additional holding members for performing the cut separating a finished bag from the tubular film. A further important advantage of the guide member is that the film is fed forward at a high speed and this avoids the risk of winding up of the film at the exit from the feeding means since the guiding extends between the feeding means and practically the beginning of the clamps, it entering the clamps substantially vertically. This guiding along the whole path also avoids folds that could cause undesired standstills.

The invention further includes a number of preferred features that are object of the dependent claims and the utility of which will be highlighted hereinafter in the detailed description of an embodiment of the invention.

Preferably the guide member moves together with said second clamp such that said open and closed positions of said second clamp are synchronized with said first and second positions of said guide member. Here again, an additional member for controlling the guide member is eliminated and the machine is simplified.

In FFS machines and particularly in the bag forming station, the tubular film is fed from above, while the cutting and sealing steps are below the feed. This facilitates the worker's access to the cutting and sealing area for maintenance work. Nevertheless, access to the area is often obstructed by the multiple drive members of the machine. To this end, in a preferred embodiment of the machine, the second clamp comprises an arm rocking about an axis located above said feeding means. By means of this arm, space behind the second clamp is freed and the maintenance work on the forming station is facilitated. Furthermore since the arm is long, it performs an almost linear movement that improves the accuracy of closure of the movable clamp on the fixed clamp.

Preferably the first and second electrodes are movable relative to the first and second clamps between a sealing position and a release position and the first and second electrodes assume the release position before said second clamp assumes said open position. At this time the bag being formed is firmly held in the guide member so that if the bag were stuck at any point or points to the electrodes during the withdrawal movement of the electrodes, the bag may easily come free.

Likewise, the invention also comprises further features of detail illustrated in the detailed description of an embodiment of the invention and in the accompanying drawings.

### Brief description of the drawings

Further advantages and features of the invention will become apparent from the following description, in which, without any limiting character, preferred embodiments of the invention are disclosed, with reference to the accompanying drawings, in which:

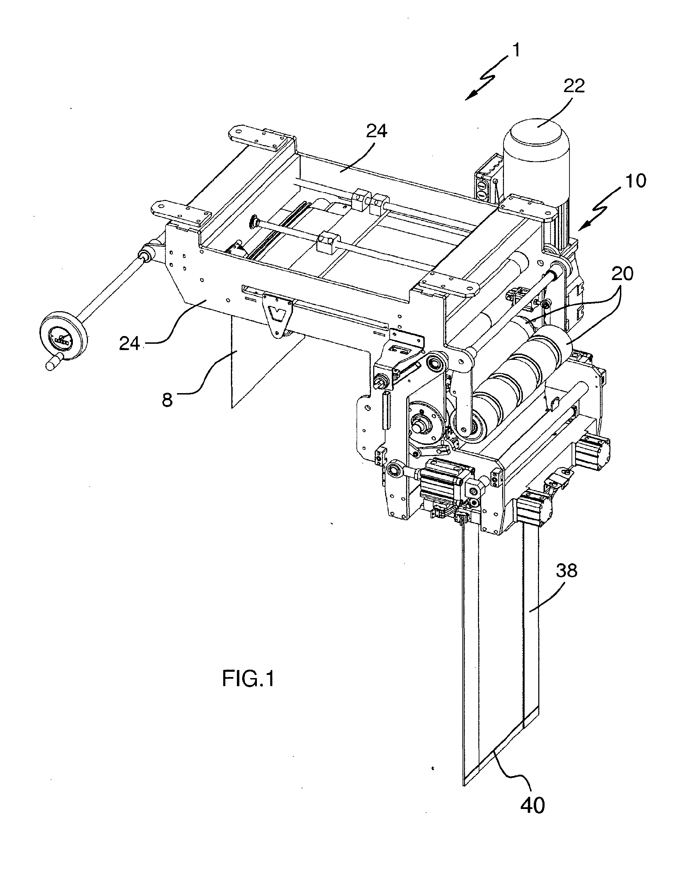

Figure 1 is a perspective view of the forming station of a machine according to the invention;

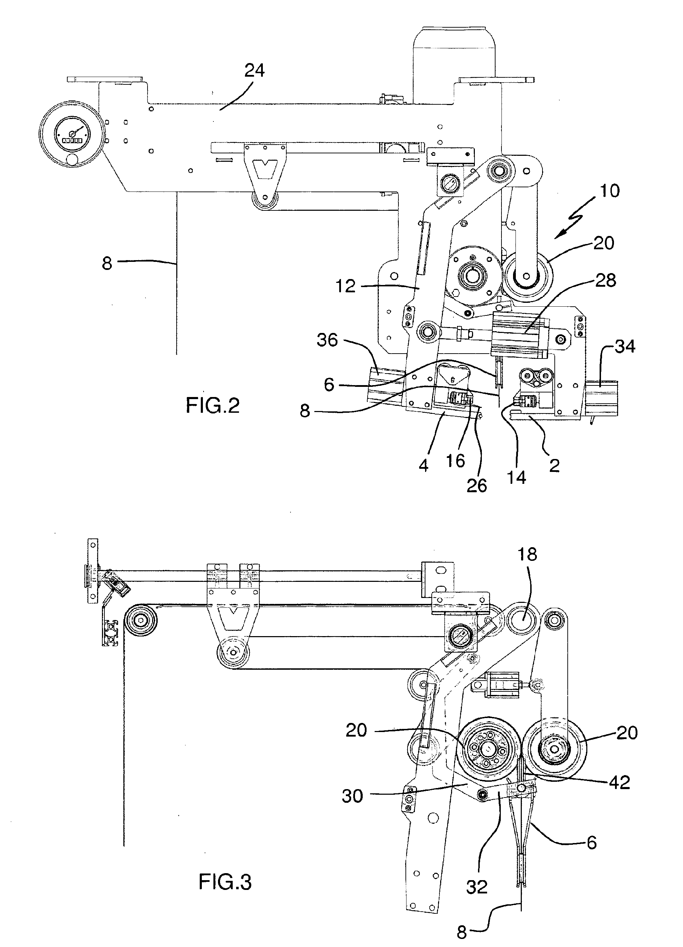

Figure 2 is a side view of the machine of Figure 1;
Figure 3 is a simplified side view of the feeding area of the tubular film, certain components having been removed to facilitate a view of the guide member;
Figure 4 shows a detail of the feeding, cutting and sealing area in the rest position of the machine;
Figure 5 shows a detail of the feeding, cutting and sealing area in the holding position of the tubular film;
Figure 6 shows a detail of the feeding, cutting and sealing area in the cutting position of the tubular film;
Figure 7 shows a detail of the feeding, cutting and sealing area in the sealing position of the tubular film to form the base of a bag.

### Detailed description of embodiments of the invention

The form, fill and seal machine of the invention comprises feeding means 10 for a tubular film 8 of any type of polymeric material. These feeding means 10 consist, in this case, of rollers 20 driven by a geared motor unit 22. The rollers 20 are rotatably mounted on flatbars 24 attached to the not shown frame of the machine 1. The rollers 20 feed the tubular film 8 from an unwinding station that is not shown either in the figures.

Below the feeding means 10 there is a first static vertical guide 42 connected to a movable guide member 6 for the tubular film 8 and first and second clamps 2, 4 for holding the tubular film 8 during the forming of the bag 38. In this case, the guide member 6 has the form of a funnel to facilitate the entry of the tubular film 8 coming from the unwinding station. The guide member 6 extends from the exit of the rollers 20 to the vicinity of the clamps 2, 4 to avoid any risk of rolling-up of the tubular film 8.

The first and second clamps 2, 4 comprise first and second sealing electrodes 14, 16 for making the horizontal seal 40 forming the base of the bag 38.

In this case, between the first and second clamps 2, 4 and the first and second electrodes 14, 16 the machine 1 comprises cutting means 26 formed by a horizontal blade extending over the whole width of the tubular film 8.

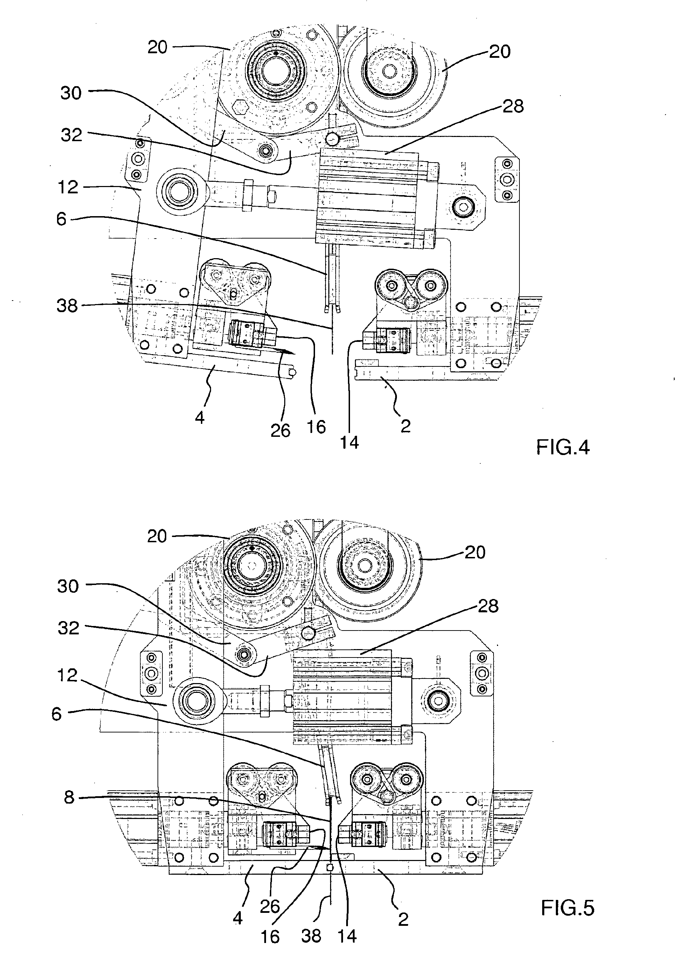

As may be seen in the figures, the first clamp 2 is fixed whereas the second clamp 4 is movable between an open position (Figure 4) allowing the passage of said tubular film 8 and a closed position (Figures 5 to 7). This eliminates the need for an additional drive mechanism for the first clamp 2. Bearing in mind that the FFS machines often fill the bags with powdery materials, they operate in environments which are aggressive for many mechanisms. This configuration eliminates a drive mechanism liable to break down due to the environment.

In turn the guide member 6 is movable between a first position remote from the first clamp 2 and a second position close thereto. In the first position, the guide member 6 is placed such as to allow the passage of the tubular film between the first and second clamps 2, 4, while in the position close to the first clamp 2, the tubular film is trapped between the guide member 6 and the first and second clamps 2, 4, to be cut by the cutting means 26. At this time, the tubular film 8 is substantially vertical in the cutting area, which avoids unnecessary deformation of the tubular film 8 that could lead to blockages of the machine 1.

In this embodiment, the second clamp 4 is fixed to an arm 12 rocking about an axis 18 situated above the feeding means 10. The rocking arm 12 is driven by a first pneumatic cylinder 28 is connected with the flatbar 24 attached to the frame. The length of the rocking arm 12 allows the movement followed by the second clamp 4 to be almost linear. Alternatively, the movement of the second clamp 4 may also be linear using an appropriate drive mechanism. Nevertheless, this embodiment affords the advantage of not needing very precise guideways.

Also with a view to reducing additional drive mechanisms liable to undergo mechanical failures, the guide member 6 of this embodiment moves together with the second clamp 4 by means of an four-bar linkage formed by the rocking arm 12 and the auxiliary rods 30, 32, such that the first and second positions of the guide member 6 are synchronized with the open and closed positions of the second clamp 4. Nevertheless, the movement of the guide member 6 is not identical to that of the second clamp 4.

Finally, it should be pointed out that in the embodiment shown in the figures, the first and second electrodes 14, 16 are movable relative to the first and second clamps between a sealing position and a release position. These electrodes are driven independently of the first cylinder 28 by second and third pneumatic cylinders 34, 36. Thus, by operating these cylinders the first and second electrodes 14, 16 move to the release position before said second clamp moves to the open position.

Hereinafter, with reference to Figures 4 to 7, a detailed explanation will be given of the process carried out by the machine 1 of the invention.

The invention contemplates a first feeding stage for the tubular film 8. In the initial situation of Figure 4, the bottom seal of a bag 38 has just been made and the bag may move down. The second movable clamp 4 is in the open position with the second electrode 16 in the release position, namely, the second clamp 4 is remote from the first fixed clamp 2 due to the first pneumatic cylinder 28 being extended. Likewise, the guide member 6 is in a position remote from the first clamp 2, due to the fact of moving together with the second clamp 4 through the attachment of the auxiliary rods 30, 32 with the rocking arm 12. The tubular film 8 moves downwards pushed by the drive means 10 until the upper edge of the bag 38 is aligned with the cutting means 26 at the desired height.

Thus, in Figure 5, the second clamp 4 moves to the closed position holding the upper end of the bag 38 and the lower end of the tubular film 8. In turn, the guide member 6 has moved to the second position close to the first clamp 2 and the tubular film 8 is held between the guide member 6 and the first and second clamps 2, 4. This is the holding step of the tubular film 8.

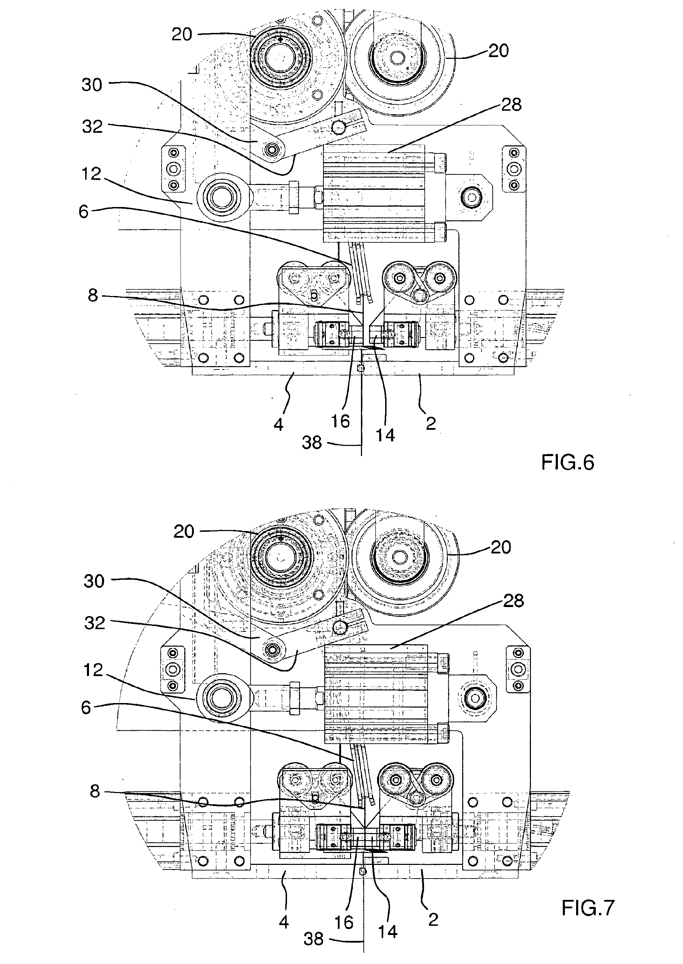

The operation then moves on to the sealing step. At this time, the second and third pneumatic cylinders 34, 36 move the first and second electrodes 14, 16 from the release position to the sealing position. As is to be seen in Figure 6, due to the cutting means 26 projecting beyond the second electrode 16, the tubular film 8 which will be sealed is separated from the lower bag 38. The first and second electrodes 14, 16 trap the tubular film 8 between them and heat and weld the polymeric material to form the seal 40 configuring the bottom of a new bag 38.

In the bag release step, after the bottom of the bag 38 has been formed, in the first place the first and second electrodes 14, 16 assume the release position of Figure 5 before the second clamp 4 moves to the open position. This affords the advantage that any points of adherence that might exist between the seal 40 and the first and second electrodes 14, 16 break away.

Thereafter, the second clamp 4 is retracted and the finished bag 38, which is held by transfer means not shown in the figures and which carry the bag to the filling station to continue the process, is released.

The machine of the invention is applicable to the manufacture of any type of bags made from polymeric material susceptible of being sealed by this technology.

## Claims

1. A form, fill and seal machine comprising
[a] feeding means (10) for a tubular film (8) of polymeric material,
[b] a guide member (6) for said tubular film (8),
[c] first and second clamps (2, 4) comprising first and second sealing electrodes (14, 16),
[d] cutting means (26),
[e] said first clamp (2) being fixed and said second clamp (4) being movable between an open position allowing the passage of said tubular film (8) and a closed position,
[f] said guide member (6) being rotatably mounted and movable between a first position remote from said first clamp (2) allowing the passage of said tubular film (8) between said first and second clamps (2, 4) and a second position close to said first clamp (2),
**characterized in that**
in said second position said guide member (6) is oriented with respect to said first and second clamps (2, 4), such that said tubular film (8) is trapped between said guide member (6) and said first and second clamps (2, 4) and vertically arranged in the cutting area, to be cut by said cutting means (26).

2. A form, fill and seal machine according to claim 1, **characterized in that** said guide member (6) moves together with said second clamp (4) such that said open and closed positions of said second clamp (4) are synchronized with said first and second positions of said guide member (6).

3. A form, fill and seal machine according to claim 1 or 2, **characterized in that** said second clamp (4) comprises an arm (12) rocking about an axis (18) situated above said feeding means (10).

4. A form, fill and seal machine according to any one of the claims 1 to 3, **characterized in that** said first and second electrodes (14, 16) are movable relative to said first and second clamps (2, 4) between a sealing position and a release position and **in that** said first and second electrodes (14, 16) assume said release position before said second clamp (4) assumes said open position.

5. A form, fill and seal machine according to any of the claims 1 to 4, **characterized in that** said feeding means (10) are horizontally offset with respect to the vertical plane contained in the contact point between said first clamp (2) and said second clamps (4) in said closed position.

6. A form, fill and seal machine according to any of the claims 1 to 5, **characterized in that** in said second position said guide member (6) is oriented such that said tubular film is vertically arranged between said guide member (6) and the contact point of said first clamp (2) and said second clamp (4) in said closed position.

7. A form, fill and seal machine according to any of the claims 1 to 6, **characterized in that** said guide member (6) extends between the feeding means (10) and the beginning of said first clamp (2) and said second clamp (4) in said closed position.

## Patentansprüche

1. Form-, Füll-und Verschließmaschine, umfassend
[a] Zuführmittel (10) für eine Schlauchfolie (8) aus Polymermaterial,
[b] ein Führungselement (6) für die Schlauchfolie (8),
[c] erste und zweite Klemmen (2, 4), die erste und zweite Verschließelektroden (14, 16) umfassen,
[d] Schneidmittel (26),
[e] wobei die erste Klemme (2) fest ist und die zweite Klemme (4) zwischen einer offenen Position, die den Durchgang der Schlauchfolie (8) ermöglicht, und einer geschlossenen Position bewegbar ist,
[f] wobei das Führungselement (6) drehbar angebracht und zwischen einer ersten Position, entfernt von der ersten Klemme (2), die den Durchgang der Schlauchfolie (8) zwischen den ersten und zweiten Klemmen (2, 4) ermöglicht, und einer zweiten Position, nahe der ersten Klemme (2), bewegbar ist,
**dadurch gekennzeichnet, dass**
in der zweiten Position das Führungselement (6) in Bezug auf die ersten und zweiten Klemmen (2, 4) so ausgerichtet ist, dass die Schlauchfolie (8) zwischen dem Führungselement (6) und den ersten und zweiten Klemmen (2, 4) eingeklemmt und senkrecht im Schneidebereich angeordnet ist, um mit den Schneidmitteln (26) geschnitten zu werden.

2. Form-, Füll-und Verschließmaschine nach Anspruch 1, **dadurch gekennzeichnet, dass** sich das Führungselement (6) zusammen mit der zweiten Klemme (4) bewegt, so dass die offenen und geschlossenen Positionen der zweiten Klemme (4) mit den ersten und zweiten Positionen des Führungselementes (6) synchronisiert sind.

3. Form-, Füll-und Verschließmaschine nach Anspruch 1 oder 2, **dadurch gekennzeichnet, dass** die zweite Klemme (4) einen Arm (12) umfasst, der um eine Achse (18) schwingt, die über den Zuführmitteln (10) liegt.

4. Form-, Füll-und Verschließmaschine nach einem der Ansprüche 1 bis 3, **dadurch gekennzeichnet, dass** die ersten und zweiten Elektroden (14, 16) relativ zu den ersten und zweiten Klemmen (2, 4) zwischen einer Verschließposition und einer Freigabeposition bewegbar sind, und dass die ersten und zweiten Elektroden (14, 16) die Freigabeposition einnehmen, bevor die zweite Klemme (4) die offene Position einnimmt.

5. Form-, Füll-und Verschließmaschine nach einem der Ansprüche 1 bis 4, **dadurch gekennzeichnet, dass** die Zuführmittel (10), in Bezug auf die senkrechte Ebene, die in dem Kontaktpunkt zwischen der ersten Klemme (2) und der zweiten Klemme (4) in der geschlossenen Position enthalten ist, waagerecht versetzt sind.

6. Form-, Füll-und Verschließmaschine nach einem der Ansprüche 1 bis 5, **dadurch gekennzeichnet, dass** in der zweiten Position das Führungselement (6) so ausgerichtet ist, dass die Schlauchfolie zwischen dem Führungselement (6) und dem Kontaktpunkt der ersten Klemme (2) und der zweiten Klemme (4) in der geschlossenen Position senkrecht angeordnet ist.

7. Form-, Füll-und Verschließmaschine nach einem der Ansprüche 1 bis 6, **dadurch gekennzeichnet, dass** sich das Führungselement (6) zwischen den Zuführmitteln (10) und dem Beginn der ersten Klemme (2) und der zweiten Klemme (4) in der geschlossenen Position erstreckt.

## Revendications

1. Machine à former, remplir et sceller, comprenant
[a] des moyens d'alimentation (10) pour un film tubulaire (8) de matière polymère,
[b] un élément guide (6) pour ledit film tubulaire (8),
[c] des première et seconde pinces (2, 4) comprenant des première et seconde électrodes de scellage (14, 16),
[d] des moyens de coupe (26),
[e] ladite première pince (2) étant fixe et ladite seconde pince (4) pouvant se déplacer entre une position ouverte qui permet le passage dudit film tubulaire (8) et une position fermée,
[f] ledit élément guide (6) étant monté de façon rotative et pouvant se déplacer entre une première position éloignée de ladite première pince (2) qui permet le passage dudit film tubulaire (8) entre lesdites première et seconde pinces (2, 4) et une seconde position proche de ladite première pince (2),
**caractérisée en ce que**
dans ladite seconde position, ledit élément guide (6) est orienté par rapport auxdites première et seconde pinces (2, 4) de telle sorte que ledit film tubulaire (8) est emprisonné entre ledit élément guide (6) et lesdites première et seconde pinces (2, 4) et disposé verticalement dans la zone de coupe, pour être coupé par lesdits moyens de coupe (26).

2. Machine à former, remplir et sceller selon la revendication 1, **caractérisée en ce que** ledit élément guide (6) se déplace avec ladite seconde pince (4) de telle sorte que lesdites positions ouverte et fermée de ladite seconde pince (4) sont synchronisées avec lesdites première et seconde positions dudit élément guide (6).

3. Machine à former, remplir et sceller selon la revendication 1 ou 2, **caractérisée en ce que** ladite seconde pince (4) comprend un bras (12) qui oscille autour d'un axe (16) situé au-dessus desdits moyens d'alimentation (10).

4. Machine à former, remplir et sceller selon une quelconque des revendications 1 à 3, **caractérisée en ce que** lesdites première et seconde électrodes (14, 16) peuvent se déplacer par rapport auxdites première et seconde pinces (2, 4) entre une position de scellement et une position de libération et **en ce que** lesdites première et seconde électrodes (14, 16) prennent ladite position de libération avant que ladite seconde pince (4) prenne ladite position ouverte.

5. Machine à former, remplir et sceller selon une quelconque des revendications 1 à 4, **caractérisée en ce que** lesdits moyens d'alimentation (10) sont décalés horizontalement par rapport au plan vertical contenu dans le point de contact entre ladite première pince (2) et ladite seconde pince (4) dans ladite position fermée.

6. Machine à former, remplir et sceller selon une quelconque des revendications 1 à 5, **caractérisée en ce que**, dans ladite seconde position, ledit élément guide (6) est orienté de telle sorte que ledit film tubulaire est disposé verticalement entre ledit élément guide (6) et le point de contact de ladite première pince (2) et de ladite seconde pince (4) dans ladite position fermée.

7. Machine à former, remplir et sceller selon une quelconque des revendications 1 à 6, **caractérisée en ce que** ledit élément guide (6) s'étend entre lesdits moyens d'alimentation (10) et le début de ladite première pince (2) et de ladite seconde pince (4) dans ladite position fermée.
